# EUROPEAN PATENT APPLICATION

(11) **EP 4 700 089 A1**
(43) Date of publication of application: **25.02.2026**
(21) Application number: 24792376.6
(22) Date of filing: 06.03.2024
(51) Int. Cl.: C08L 77/00, C08L 23/26, F16L 11/04

(54) **POLYAMIDE RESIN COMPOSITION**

(30) Priority: 21.04.2023 JP 2023070355
(71) Applicant: UBE Corporation, Ube-shi, Yamaguchi 755-8633 (JP)
(72) Inventor: TSUJIMOTO Kuniteru, Ube-shi, Yamaguchi 755-8633 (JP); NOZAKI Natsumi, Ube-shi, Yamaguchi 755-8633 (JP); FUJII Hiroaki, Ube-shi, Yamaguchi 755-8633 (JP); KUSUMOTO Takaaki, Ube-shi, Yamaguchi 755-8633 (JP); SASAKI Ryousuke, Ube-shi, Yamaguchi 755-8633 (JP); NAKAYAMA Tomonori, Ube-shi, Yamaguchi 755-8633 (JP)
(74) Representative: Hoffmann Eitle
(86) International application number: PCT/JP2024/008579
(87) International publication number: WO 2024/219100

(57) **Abstract**

Provided is a polyamide resin composition including an aliphatic polyamide resin, and a polyolefin exhibiting reactivity with a terminal group of the polyamide resin, wherein the aliphatic polyamide resin has 80 mol% or more of a moiety derived from a linear or branched hydrocarbon compound based on the total monomer units, and the aliphatic polyamide resin has a proportion of high molecular weight components to lower molecular weight components in a certain range, in a molecular weight distribution curve in terms of polymethyl methacrylate. The resin composition provides a resin composition having excellent formability and high hydrolysis resistance.

## Description

### Technical Field

The present invention relates to a polyamide resin composition, particularly useful for coolant tube applications.

### Background Art

In tubes for automobile piping, the main material is increasingly changing from a metal to a resin having excellent anticorrosive properties and a light weight, in response to an age-old problem of rusting caused by the antifreezing agent on the road, the prevention of global warming, and requests for energy saving. Typically, examples of the resin to be used in the tube for piping include a polyamide resin, a saturated polyester resin, a polyolefin resin, and a thermoplastic polyurethane resin. Among these, the polyamide resin is excellent in characteristics such as gas barrier properties, toughness, pin hole resistance, thermal resistance, and oil resistance, and tubes having excellent resistance to alcohols such as ethylene glycol that is contained in a coolant are expected to be obtained.

Tubes for automobile piping such as coolant tubes are required to have many characteristics such as durability against chemicals, temperatures, and impacts, and formability as a tube. In resins including polyamides, a composition corresponding to required characteristics is designed by changing monomer units, or optionally blending other polymers, or combining a method in which a different material is used in an inner layer/outer layer, or the like (Patent Literatures 1 to 4). In addition, since the polymer is an aggregation of components each having a different molecular weight, the control of the molecular weight is also used as one of the measures for controlling characteristics (Patent Literature 5).

### Citation List

### Patent Literature

Patent Literature 1: International Publication No. WO 2015/033982
Patent Literature 2: Japanese Patent Laid-Open No. 57-147519
Patent Literature 3: Japanese Translation of PCT International Application Publication No. 2008-507436
Patent Literature 4: Japanese Patent Laid-Open No. 63-170460
Patent Literature 5: Japanese Patent Laid-Open No. 2015-110764

### Summary of Invention

### Technical Problem

The polyamide resin is significantly useful as a forming resin due to the flexibility in the design of the molecular structure and the physical properties of the polyamide itself. However, in the design of a polymer molecule, two or more physical properties are often in a trade-off relationship. For example, while the resin according to Patent Literature 5 has high flowability, there remains room for improvement from the viewpoint of formability. Further, from the viewpoint of formability, the resin for injection molding is not always suitable for tube forming, and the resin is required to have formability corresponding to the article to be produced or the purpose.

Since the polyamide has an amide bond (-NHCO-) as a constitutional unit, it cannot exert sufficient performance in hydrolysis resistance. As described in Patent Literature 3, although a resin other than the polyamide is attempted to be used in a tube inner layer, a tube constituting a plurality of layers is required to have high adhesiveness between layers, and there remains room for improvement in durability derived from adhesiveness between layers. In the case of using a mixture of polymers as described in Patent Literature 4, the contact between the polyamide and water cannot be prevented, and the compatibility between polymers is also problematic, and the formulation of a suitable resin composition is thus far from easy.

From the viewpoint of the reduction in weight and resource saving, there is always a demand for a resin that has formability allowing forming even when the amount of the resin used is small and the thickness is small, and has high durability even with a small thickness. From such viewpoints, the present invention is intended to provide a resin composition having excellent formability and high hydrolysis resistance.

### Solution to Problem

The present invention relates to the resin compositions described in each item below or various formed products using them.
[1] A polyamide resin composition comprising an aliphatic polyamide resin, and a polyolefin having a functional group exhibiting reactivity with a terminal group of the polyamide resin, wherein
   the aliphatic polyamide resin has 80 mol% or more of a moiety derived from a linear or branched hydrocarbon compound based on the total monomer units;
   a mass ratio of a content of the polyolefin (B) to a total mass of a content of the aliphatic polyamide resin (A) and the content of the polyolefin (B), [(B)/{(A)+(B)}], is 0.15 to 0.40; and
   the aliphatic polyamide resin has the following characteristic in a molecular weight distribution curve in terms of polymethyl methacrylate:
      a value of [{ S2/(S2 + S1)} × 100] is 64 to 90, wherein S1 represents an area of a portion bounded by the molecular weight distribution curve from a point having a highest molecular weight among points corresponding to a weight fraction of 70% when a weight fraction of the most frequent value of the molecular weight distribution curve is defined as 100% to a molecular weight maximum value and an abscissa corresponding to a weight fraction of 0%, and S2 represents an area of a portion bounded by the molecular weight distribution curve from a point having a lowest molecular weight among the points corresponding to the weight fraction of 70% to a molecular weight minimum value and the abscissa corresponding to the weight fraction of 0%.
[2] The polyamide resin composition according to the above [1], wherein the polyamide resin composition has an MFR measured when an amount of 5000 g is heated to 300°C in accordance with ISO1133 of 0.01 g/10 min or more and 20 g/10 min or less.
[3] The polyamide resin composition according to the above [1] or [2], wherein an amount of a functional group per 1 g of the polyolefin [C1] is more than 25 µmol/g and less than 100 µmol/g, and an amount of an amino group per 1 g of the aliphatic polyamide resin [A1] is more than 25 µmol/g and less than 100 µmol/g.
[4] The polyamide resin composition according to any of the above [1] to [3], wherein a product of [C2] × [A2] is 250 to 750 ((µmol/g)²), wherein [C2] represents an amount of a functional group of the polyolefin contained per 1 g of the polyamide resin composition and [A2] represents an amount of an amino group of the aliphatic polyamide resin contained in 1 g of the polyamide resin composition.
[5] The polyamide resin composition according to any of the above [1] to [4], wherein a ratio of the number of methylene groups ([CH2]) to the number of amide groups ([NHCO]), [CH2]/[NHCO], in the aliphatic polyamide resin exceeds 5 on average.
[6] The polyamide resin composition according to any of the above [1] to [5], wherein the aliphatic polyamide resin contains at least one selected from the group consisting of PA11, PA12, PA69, PA610, PA612, PA910, PA912, PA1010, PA1012, and PA1212.
[7] The polyamide resin composition according to any of the above [1] to [6], wherein the polyolefin has at least one functional group selected from the group consisting of a carboxy group, an acid anhydride group, a carboxylic acid ester group, a carboxylic acid imide group, a carboxylic acid amide group, and an epoxy group, or a salt thereof.
[8] The polyamide resin composition according to any of the above [1] to [7], wherein the polyolefin is at least one selected from the group consisting of a copolymer which has an (ethylene and/or propylene)/α-olefin copolymer as a main backbone and at least a part of which has a functional group exhibiting reactivity with the terminal group of the aliphatic polyamide resin, and an (ethylene and/or propylene)/(α,β-unsaturated carboxylic acid and/or α,β-unsaturated carboxylic acid ester) copolymer.
[9] The polyamide resin composition according to any of the above [1] to [8], wherein a weight-average molecular weight (Mw) of the polyamide resin is 50,000 to 80,000.
[10] The polyamide resin composition according to any of the above [1] to [9], wherein the polyamide resin composition is used in a hollow formed product for carrying a coolant.
[11] A tube, a hose, or a pipe, comprising the polyamide resin composition according to any of the above [1] to [9].
[12] A hollow formed product having a single layer structure of the polyamide resin composition according to any of the above [1] to [9].

### Advantageous Effect of Invention

The present invention provides a polyamide resin composition having excellent formability and high hydrolysis resistance. The present polyamide resin composition provides a formed product such as a tube, a hose, and a pipe, particularly suitable for carrying a coolant.

### Brief Description of Drawing

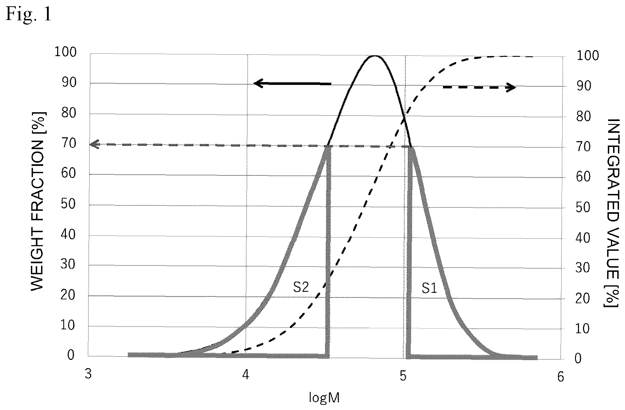

[Figure 1] Figure 1 is a schematic diagram of a GPC chart of an aliphatic polyamide resin.

### Description of Embodiments

Hereinafter, the polyamide resin composition of the present invention will be described in detail for each constitutional component.

As used herein, when a plurality of substances corresponding to each component is present in the composition, the content of each component in the composition means the total amount of the plurality of substances present in the composition, unless otherwise specified.

As used herein, "to" indicating a numerical value range means including numerical values described before and after "to" as the lower limit value and the upper limit value. For example, "50.00 to 90.00% by mass" means "50.00% by mass or more and 90.00% by mass or less".

### <Aliphatic polyamide resin>

The aliphatic polyamide resin is a polymer having an amide bond (-NHCO-) in the main chain containing an aliphatic hydrocarbon group. The aliphatic polyamide resin can be obtained by performing polymerization or copolymerization using a lactam, an aminocarboxylic acid, or an aliphatic diamine and an aliphatic dicarboxylic acid, which are structural units of the aliphatic polyamide, as raw materials by a known method such as melt polymerization, solution polymerization, or solid phase polymerization. As used herein, the "aliphatic polyamide resin" means a resin of polyamide substantially consisting of a monomer unit derived from a linear or branched hydrocarbon compound. It does not exclude that a monomer unit derived from an alicyclic structure or a cyclic compound such as an aromatic hydrocarbon is contained in the polyamide resin; however, the content of such a monomer unit in the aliphatic polyamide resin of the present invention is 20 mol% or less based on the total monomer units. The aliphatic polyamide resin of the present invention is a resin of polyamide having 80 mol% or more of a moiety derived from a linear or branched hydrocarbon compound based on the total monomer units, and is preferably a resin of polyamide including a monomer unit derived from a linear or branched hydrocarbon compound.

### (Ratio of number of methylene groups/number of amide groups)

**In** the aliphatic polyamide resin used in the present invention, the ratio of the number of methylene groups ([CH2]) to the number of amide groups ([NHCO]), [CH2]/[NHCO], preferably exceeds 5 on average. The number of methylene groups can be determined from the lactam, aminocarboxylic acid, aliphatic diamine, and aliphatic dicarboxylic acid, serving as the raw materials. When a branched hydrocarbon compound is contained in the monomer unit of the polyamide resin, the number of methylene groups is calculated by considering each of the carbon atom at the branched point of a carbon chain and the methyl group at the terminal of a branched chain as a methylene group. **In** general, when a lactam or an aminocarboxylic acid is used as the raw material, the number of methylene groups contained in the lactam or the aminocarboxylic acid is the ratio of the number of methylene groups/the number of amide groups. When an aliphatic diamine and an aliphatic dicarboxylic acid are used as the raw materials, the number obtained by dividing the sum of the number of methylene groups contained in the aliphatic diamine and the aliphatic dicarboxylic acid by 2 is the ratio of the number of methylene groups/the number of amide groups. Without wishing to be bound by a particular theory, when the ratio of the number of methylene groups/the number of amide groups is a certain value or more, the proportion of the methylene chain in the polyamide resin increases. By containing a large number of aliphatic hydrocarbon groups exhibiting hydrophobicity, hydrophobicity increases, and further, the compatibility with the polyolefin described below increases, so that a polyamide resin composition having high hydrolysis resistance is considered to be obtained. The [CH2]/[NHCO] ratio is more preferably 6 or more, and further preferably 7 or more. When a long-chain polyamide having a high [CH2]/[NHCO] ratio is used, a formed article having further excellent durability can be obtained; however, from the viewpoint of the availability of the raw material and using a resin further suitable for environment, the raw material of the polyamide resin is preferably selected such that the [CH2]/[NHCO] ratio is 12 or less.

The raw materials of the aliphatic polyamide resin below include a monomer having the number of methylene groups of 5 or less, as a single monomer. However, in a preferred embodiment of the present invention, such a monomer may also be used, as long as the ratio of the number of methylene groups/the number of amide groups exceeds 5 on average by combining such a monomer with a monomer having a large number of methylene groups.

### (Raw material of aliphatic polyamide resin)

The aliphatic polyamide resin used in the present invention preferably satisfies the conditions of the above ratio of the number of methylene groups/the number of amide groups, and any raw material that is a compound having a linear or branched hydrocarbon in the molecular backbone, used in the production of the aliphatic polyamide resin may be used. In a preferred embodiment of the present invention, even a raw material having the number of methylene groups of 5 or less can be used in an amount such that the whole aliphatic polyamide resin satisfies the above conditions. Examples of such compounds having a linear or branched hydrocarbon in the molecular backbone that can be used as the raw material of the polyamide resin are listed below.

Examples of the lactam include caprolactam, enantholactam, undecanolactam, dodecanelactam, α-pyrrolidone, and α-piperidone, and examples of the aminocarboxylic acid include 6-aminocaproic acid, 7-aminoheptanoic acid, 9-aminononanoic acid, 11-aminoundecanoic acid, and 12-aminododecanoic acid. These may be used individually or two or more thereof may be used.

Examples of the aliphatic diamine include 1,2-ethanediamine, 1,3-propanediamine, 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, 1,12-dodecanediamine, 1,13-tridecanediamine, 1,14-tetradecanediamine, 1,15-pentadecanediamine, 1,16-hexadecanediamine, 1,17-heptadecanediamine, 1,18-octadecanediamine, 1,19-nonadecanediamine, 1,20-eicosanediamine, 2-methyl-1,5-pentanediamine, 3-methyl-1,5-pentanediamine, 2-methyl-1,8-octanediamine, 2,2,4-trimethyl-1,6-hexanediamine, 2,4,4-trimethyl-1,6-hexanediamine, and 5-methyl-1,9-nonanediamine. These may be used individually or two or more thereof may be used.

Examples of the aliphatic dicarboxylic acid include oxalic acid, malonic acid, succinic acid, glutaric acid, adipic acid, pimelic acid, suberic acid, azelaic acid, sebacic acid, undecanedioic acid, dodecanedioic acid, tridecanedioic acid, tetradecanedioic acid, pentadecanedioic acid, hexadecanedioic acid, octadecanedioic acid, and eicosanedioic acid. These may be used individually or two or more thereof may be used.

Examples of the aliphatic polyamide resin that satisfies the conditions of the above ratio of the number of methylene groups/the number of amide groups include homopolymers such as polyundecaneamide (PA11), polydodecaneamide (PA12), polytetramethylene azelamide (PA49), polytetramethylene sebacamide (PA410), polytetramethylene dodecamide (PA412), polypentamethylene suberamide (PA58), polypentamethylene azelamide (PA59), polypentamethylene sebacamide (PA510), polypentamethylene dodecamide (PA512), polyhexamethylene suberamide (PA68), polyhexamethylene azelamide (PA69), polyhexamethylene sebacamide (PA610), polyhexamethylene dodecamide (PA612), polyhexamethylene tetradecamide (PA614), polyhexamethylene hexadecamide (PA616), polyhexamethylene octadecamide (PA618), polynonamethylene adipamide (PA96), polynonamethylene suberamide (PA98), polynonamethylene azelamide (PA99), polynonamethylene sebacamide (PA910), polynonamethylene dodecamide (PA912), polydecamethylene adipamide (PA106), polydecamethylene suberamide (PA108), polydecamethylene azelamide (PA109), polydecamethylene sebacamide (PA1010), polydecamethylene dodecamide (PA1012), polydodecamethylene adipamide (PA126), polydodecamethylene suberamide (PA128), polydodecamethylene azelamide (PA129), polydodecamethylene sebacamide (PA1210), and polydodecamethylene dodecamide (PA1212); and copolymers using several kinds of raw materials that form these polyamides. Here, the term "PA" means "polyamide".

Among these, from the viewpoint of economic efficiency and easy availability, polyundecaneamide (PA11), polydodecaneamide (PA12), polyhexamethylene azelamide (PA69), polyhexamethylene sebacamide (PA610), polyhexamethylene dodecamide (PA612), polynonamethylene decamide (PA910), polynonamethylene dodecamide (PA912), polydecamethylene sebacamide (PA1010), polydecamethylene dodecamide (PA1012), or polydodecamethylene dodecamide (PA1212); a copolymer using several kinds of raw materials that form these polyamides; or the like is preferred, and at least one homopolymer selected from the group consisting of polyundecaneamide (PA11), polydodecaneamide (PA12), polyhexamethylene decamide (PA610), and polyhexamethylene dodecamide (PA612); and/or a copolymer using several kinds of raw materials that form these polyamides are/is more preferred.

In the aliphatic polyamide resin used in the present invention, although the whole resin preferably has a ratio of the number of methylene groups/the number of amide groups exceeding 5, an aliphatic polyamide having a ratio of the number of methylene groups/the number of amide groups of 5 or less or an aromatic polyamide may be used in combination. Examples of such an aliphatic polyamide include polyvaleroamide (PA5), polycaproamide (PA6), polyethylene adipamide (PA26), polytetramethylene succinamide (PA44), polytetramethylene glutamide (PA45), polytetramethylene adipamide (PA46), polytetramethylene suberamide (PA48), polypentamethylene succinamide (PA54), polypentamethylene glutamide (PA55), polypentamethylene adipamide (PA56), polyhexamethylene succinamide (PA64), polyhexamethylene glutamide (PA65), and polyhexamethylene adipamide (PA66); and copolymers using several kinds of raw materials that form these polyamides. Examples of the aromatic polyamide include PA4T, PA6T, PA9T, PA10T, PA6I, and PAMXD6; and copolymers using several kinds of raw materials that form these polyamides. Provided that, the aromatic polyamide is used in an amount such that the content of the monomer unit of the aliphatic hydrocarbon compound is 80 mol% or more in the polyamide resin.

As the aliphatic polyamide resin used in the present invention, a copolymer of an aliphatic polyamide having a ratio of the number of methylene groups/the number of amide groups exceeding 5 and an aliphatic polyamide having a ratio of the number of methylene groups/the number of amide groups of 5 or less may be used, and the copolymer is preferably designed such that the ratio of the number of methylene groups/the number of amide groups exceeds 5 in the whole aliphatic polyamide resin. Examples of such a copolymer include PA6/69, PA6/610, PA6/611, PA6/612, PA6/11, PA6/12, PA6/66/12, PA6/66/610, and PA6/66/612 in which the proportion of the aliphatic polyamide having a ratio of the number of methylene groups/the number of amide groups exceeding 5 is high.

Since the polyamide resin is obtained by a reaction of an amino group and a carboxy group, the polyamide resin has an amino group or a carboxy group at a molecular terminal. When [A1] represents the amount of the amino group (µmol/g) per 1 g of the polyamide resin and [B1] represents the amount of the carboxy group (µmol/g) per 1 g of the polyamide resin, each of [A1] and [B1] is preferably more than 25 µmol/g and less than 100 µmol/g, more preferably 35 µmol/g or more and less than 95 µmol/g, and further preferably 40 µmol/g or more and 90 µmol/g or less. When the polyamide resin is obtained from a lactam or an aminocarboxylic acid, [B1] is almost the same amount as that of [A1].

The amount of the amino group [A1] can be measured by dissolving the polyamide resin in a mixed solution of phenol/methanol and titrating the mixture with 0.05 N hydrochloric acid. The amount of the carboxy group [B1] can be measured by dissolving the polyamide resin in benzyl alcohol and titrating the mixture with a 0.05 N sodium hydroxide solution.

Examples of the production apparatus of the aliphatic polyamide resin include known polyamide production apparatuses, for example, a batch type reaction oven, a one tank type or multiple tank type continuous reaction apparatus, a tubular continuous reaction apparatus, and a kneading reaction extruder such as a single-screw type kneading extruder or a twin-screw type kneading extruder. The polymerization method can be polymerization in which a known method such as melt polymerization, solution polymerization, or solid phase polymerization is used and an operation under an ordinary pressure, a reduced pressure or an increased pressure is repeated. These polymerization methods may be used individually or in appropriate combination thereof.

The aliphatic polyamide resin is produced by a polymerization reaction using the above raw material. For example, the aliphatic polyamide resin is produced by polymerizing or copolymerizing the polyamide raw material by any known method such as melt polymerization, solution polymerization, or solid phase polymerization. Here, in the production of the aliphatic polyamide resin, polymerization or copolymerization may be carried out by adding a further amine in addition to the raw material of the polyamide. When a further amine is added, the aliphatic polyamide resin may be produced by adding the amine after polymerization and melt-kneading the mixture. As described above, the amine can be added at any stage during polymerization, or at any stage during melt-kneading after such polymerization.

Examples of the above amine include a monoamine, a diamine, a triamine, and a polyamine. In addition to the amine, a carboxylic acid such as a monocarboxylic acid, a dicarboxylic acid, or a tricarboxylic acid may be added, if necessary, without departing from the range of the above terminal group concentration conditions. The amine and the carboxylic acid may be simultaneously or separately added. The amines and carboxylic acids listed below may be used individually or two or more thereof may be used. By adjusting the amount of the amine and the carboxylic acid, the molecular weight of the aliphatic polyamide to be produced, the amount of the amino group at the terminal, and the amount of the carboxy group at the terminal can also be adjusted.

Specific examples of the monoamine to be added include aliphatic monoamines such as methylamine, ethylamine, propylamine, butylamine, pentylamine, hexylamine, heptylamine, octylamine, 2-ethylhexylamine, nonylamine, decylamine, undecylamine, dodecylamine, tridecylamine, tetradecylamine, pentadecylamine, hexadecylamine, octadecylamine, octadecyleneamine, eicosylamine, and docosylamine; alicyclic monoamines such as cyclohexylamine and methylcyclohexylamine; aromatic monoamines such as benzylamine and β-phenylmethylamine; symmetrical secondary amines such as N,N-dimethylamine, N,N-diethylamine, N,N-dipropylamine, N,N-dibutylamine, N,N-dihexylamine, and N,N-dioctylamine; and asymmetrical secondary amines such as N-methyl-N-ethylamine, N-methyl-N-butylamine, N-methyl-N-dodecylamine, N-methyl-N-octadecylamine, N-ethyl-N-hexadecylamine, N-ethyl-N-octadecylamine, N-propyl-N-hexadecylamine, and N-propyl-N-benzylamine. These may be used individually or two or more thereof may be used.

Specific examples of the diamine to be added include aliphatic diamines such as 1,2-ethanediamine, 1,3-propanediamine, 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, 1,12-dodecanediamine, 1,13-tridecanediamine, 1,14-tetradecanediamine, 1,15-pentadecanediamine, 1,16-hexadecanediamine, 1,17-heptadecanediamine, 1,18-octadecanediamine, 2-methyl-1,5-pentanediamine, 3-methyl-1,5-pentanediamine, 2-methyl-1,8-octanediamine, 2,2,4-trimethyl-1,6-hexanediamine, 2,4,4-trimethyl-1,6-hexanediamine, and 5-methyl-1,9-nonanediamine; alicyclic diamines such as 1,3-bis(aminomethyl)cyclohexane, 1,4-bis(aminomethyl)cyclohexane, bis(4-aminocyclohexyl)methane, 2,2-bis(4-aminocyclohexyl)propane, bis(3-methyl-4-aminocyclohexyl)methane, 2,2-bis(3-methyl-4-aminocyclohexyl)propane, 5-amino-2,2,4-trimethyl-1-cyclopentanemethylamine, 5-amino-1,3,3-trimethylcyclohexane methylamine, bis(aminopropyl)piperazine, bis(aminoethyl)piperazine, 2,5-bis(aminomethyl)norbornane, 2,6-bis(aminomethyl)norbornane, 3,8-bis(aminomethyl)tricyclodecane, and 4,9-bis(aminomethyl)tricyclodecane; and aromatic diamines such as m-xylylene diamine and p-xylylene diamine. These may be used individually or two or more thereof may be used.

Specific examples of the triamine to be added include 1,2,3-triaminopropane, 1,2,3-triamino-2-methylpropane, 1,2,4-triaminobutane, 1,2,3,4-tetraminobutane, 1,3,5-triaminocyclohexane, 1,2,4-triaminocyclohexane, 1,2,3-triaminocyclohexane, 1,2,4,5-tetraminocyclohexane, 1,3,5-triaminobenzene, 1,2,4-triaminobenzene, 1,2,3-triaminobenzene, 1,2,4,5-tetraminobenzene, 1,2,4-triaminonaphthalene, 2,5,7-triaminonaphthalene, 2,4,6-triaminopyridine, 1,2,7,8-tetraminonaphthalene, and 1,4,5,8-tetraminonaphthalene. These may be used individually or two or more thereof may be used.

The polyamine to be added is only required to be a compound having a plurality of primary amino groups (-NH₂) and/or secondary amino groups (-NH-), and examples thereof include polyalkyleneimines, polyalkylenepolyamines, polyvinylamines, and polyallylamines. The amino group having an active hydrogen is a reaction point of the polyamine.

The polyalkyleneimine is produced by a method in which an alkyleneimine such as ethyleneimine or propyleneimine is subjected to ionic polymerization, a method in which an alkyloxazoline is polymerized, and then the polymer is partially hydrolyzed or completely hydrolyzed, or the like. Examples of the polyalkylenepolyamine include diethylene triamine, triethylenetetramine, pentaethylenehexamine, and reactants of ethylenediamine and a polyfunctional compound. The polyvinylamine can be obtained by, for example, polymerizing N-vinylformamide to form poly(N-vinylformamide), and then the polymer is partially hydrolyzed or completely hydrolyzed with an acid such as hydrochloric acid. **In** general, the polyallylamine can be obtained by polymerizing a hydrochloride of an allylamine monomer, and then removing hydrochloric acid. These may be used individually or two or more thereof may be used. Among these, the polyalkyleneimine is preferred.

Examples of the polyalkyleneimine include homopolymers and copolymers obtained by polymerizing one or two or more kinds of alkyleneimines having 2 or more and 8 or less carbon atoms, such as ethyleneimine, propyleneimine, 1,2-butyleneimine, 2,3-butyleneimine, and 1,1-dimethylethyleneimine, by an ordinary method. Among these, polyethyleneimine is more preferred. The polyalkyleneimine may be any of a branched polyalkyleneimine that contains a primary amine, a secondary amine, and a tertiary amine obtained by subjecting an alkyleneimine serving as the raw material to ring-opening polymerization, a linear polyalkyleneimine that contains only a primary amine and a secondary amine obtained by subjecting an alkyloxazoline serving as the raw material to polymerization, or a three-dimensionally crosslinked structure.
Further, the polyalkyleneimine may contain ethylenediamine, propylenediamine, diethylenetriamine, triethylenetetramine, tetraethylenepentamine, dipropylenetriamine, tripropylenetetramine, dihexamethylenetriamine, aminopropylethylenediamine, bisaminopropylethylenediamine, or the like. Typically, the polyalkyleneimine has a primary amino group and a secondary amino group (imino group) each having an active hydrogen atom, in addition to a tertiary amino group, depending on the reactivity of the active hydrogen atom on a nitrogen atom contained in the polyalkyleneimine.

The number of nitrogen atoms in the polyalkyleneimine is not particularly limited, and is preferably 4 or more and 3,000 or less, more preferably 8 or more and 1,500 or less, and further preferably 11 or more and 500 or less. The number-average molecular weight of the polyalkyleneimine is preferably 100 or more and 20,000 or less, more preferably 200 or more and 10,000 or less, and further preferably 500 or more and 8,000 or less.

On the other hand, examples of the carboxylic acid to be added include aliphatic monocarboxylic acids such as acetic acid, propionic acid, butyric acid, valeric acid, caproic acid, enanthic acid, caprylic acid, capric acid, pelargonic acid, undecanoic acid, lauric acid, tridecanoic acid, myristic acid, myristoleic acid, palmitic acid, stearic acid, oleic acid, linoleic acid, arachic acid, behenic acid, and erucic acid; alicyclic monocarboxylic acids such as cyclohexane carboxylic acid and methylcyclohexane carboxylic acid; aromatic monocarboxylic acids such as benzoic acid, toluic acid, ethylbenzoic acid, and phenylacetic acid; aliphatic dicarboxylic acids such as malonic acid, succinic acid, glutaric acid, adipic acid, pimelic acid, suberic acid, azelaic acid, sebacic acid, undecanedioic acid, dodecanedioic acid, hexadecanedioic acid, hexadecenedioic acid, octadecanedioic acid, octadecenedioic acid, eicosanedioic acid, eicosenedioic acid, docosanedioic acid, diglycolic acid, 2,2,4-trimethyladipic acid, and 2,4,4-trimethyladipic acid; alicyclic dicarboxylic acids such as 1,3-cyclohexane dicarboxylic acid, 1,4-cyclohexane dicarboxylic acid, and norbornanedicarboxylic acid; aromatic dicarboxylic acids such as terephthalic acid, isophthalic acid, phthalic acid, m-xylylenedicarboxylic acid, p-xylylenedicarboxylic acid, 1,4-naphthalenedicarboxylic acid, 2,6-naphthalenedicarboxylic acid, and 2,7-naphthalenedicarboxylic acid; and tricarboxylic acids such as 1,2,4-butanetricarboxylic acid, 1,3,5-pentanetricarboxylic acid, 1,2,6-hexanetricarboxylic acid, 1,3,6-hexanetricarboxylic acid, 1,3,5-cyclohexanetricarboxylic acid, and trimesic acid. These may be used individually or two or more thereof may be used.

The amount used of the amine to be added may be appropriately determined by a known method within a range not departing from the range of the above terminal group concentration conditions. Typically, from the viewpoint of obtaining sufficient reactivity and making the production of a polyamide having a desired viscosity easy, the amount of the amine to be added is preferably 0.5 meq/mol or more and 20 meq/mol or less, and more preferably 1.0 meq/mol or more and 10 meq/mol or less (with respect to the equivalent (eq) of the amino group, the amount of the amino group that reacts with a carboxy group in a ratio of 1:1 to form an amide group is defined as 1 equivalent) per 1 mol of the polyamide raw material (1 mol of the monomer or monomer unit constituting a repeating unit). The amount of the carboxylic acid used can also be appropriately determined within a range not departing from the range of the above terminal group concentration conditions.

In the aliphatic polyamide resin, among the amines listed above, a diamine and/or a polyamine are/is preferably added during polymerization; at least one selected from the group consisting of an aliphatic diamine, an alicyclic diamine, and a polyamine is more preferably added during polymerization, from the viewpoint of suppressing the generation of gel; and a polyamine is further preferably added during polymerization to simultaneously satisfy a desired relative viscosity for extrusion applications and the conditions of the terminal amino group concentration of the present invention.

The aliphatic polyamide resin may be a two-component mixture or a copolymer. **In** the case of a copolymer, the aliphatic polyamide resin may be a block copolymer or a random copolymer.

The weight-average molecular weight (Mw) of the aliphatic polyamide resin is preferably 50,000 or more, and more preferably 60,000 or more, from the viewpoint of obtaining hydrolysis resistance. On the other hand, from the viewpoint of tube formability, the Mw is preferably 80,000 or less, and more preferably 70,000 or less. When a plurality of kinds of polyamide resins are contained, the Mw of the whole polyamide resin is preferably within the above range. Here, the Mw of the whole polyamide resin is a value calculated by gel permeation chromatography (GPC) under the conditions described below.

### (Molecular weight distribution curve of aliphatic polyamide resin)

The aliphatic polyamide resin of the present invention has the following characteristics in the molecular weight distribution curve. That is, in a molecular weight distribution curve in terms of polymethyl methacrylate, the value of [{ S2/(S2 + S1)} × 100] is 64 to 90, wherein S1 represents an area of a portion bounded by the molecular weight distribution curve from a point having a highest molecular weight among points corresponding to a weight fraction of 70% when the weight fraction of the most frequent value of the molecular weight distribution curve is defined as 100% to a molecular weight maximum value and an abscissa corresponding to a weight fraction of 0%, and S2 represents an area of a portion bounded by the molecular weight distribution curve from a point having a lowest molecular weight among the points corresponding to the weight fraction of 70% to a molecular weight minimum value and the abscissa corresponding to the weight fraction of 0%.

S1 represents, in the molecular weight distribution curve of the aliphatic polyamide resin, the area of the portion bounded by the molecular weight distribution curve from the point having the highest molecular weight among points corresponding to a weight fraction of 70% when the weight fraction of the most frequent value of the molecular weight distribution curve is defined as 100% to the molecular weight maximum value and the abscissa corresponding to a weight fraction of 0%. S2 represents, in the molecular weight distribution curve, the area of the portion bounded by the molecular weight distribution curve from the point having the lowest molecular weight among the points corresponding to a weight fraction of 70% to the molecular weight minimum value and the abscissa corresponding to the weight fraction of 0%. S1 represents the proportion of high molecular weight components in the aliphatic polyamide resin, and S2 represents the proportion of lower molecular weight components in the aliphatic polyamide resin. Thus, when the value of the area ratio [{ S2/(S2 + S1)} × 100] is high, the proportion of the lower molecular weight component in the aliphatic polyamide resin increases. For the regions indicated by S1 and S2, see Figure 1 which is a schematic diagram of an example of the molecular weight distribution curve obtained by GPC.

The molecular weight distribution of the aliphatic polyamide resin in terms of polymethyl methacrylate is defined as a value determined as follows: 20 µL of a solution obtained by dissolving the aliphatic polyamide resin in 1, 1,1,3,3,3-hexafluoro-2-propanol (HFIP) is injected into gel permeation chromatography (GPC) equipped with TSKgel Super AW3000 and AW5000 [manufactured by Tosoh Corporation] columns in which the temperature condition is set to 40°C, and measured at a flow rate of 0.3 mL/min and a sample injection volume of 20 µL, and the result is converted to polymethyl methacrylate. The weight-average molecular weight of the aliphatic polyamide resin can be determined by the same method. The aliphatic polyamide resin having a weight-average molecular weight of 1,000 or more in terms of polymethyl methacrylate is applied to the molecular weight distribution curve.

The aliphatic polyamide resin of the present invention has a value of the area ratio [{S2/(S2 + S1)} × 100] of 64 to 90. This means that the low molecular weight component is contained more than the high molecular weight component, in the aliphatic polyamide resin. When the value of [{S2/(S2 + S1)} × 100] falls within the above range, the proportion of the lower molecular weight component increases, so that flowability tends to moderately decrease. As a result, the melt flow rate (MFR) can be adjusted to a range suitable for tube forming. The value of [{S2/(S2 + S1)} × 100] is **preferably** 65 or more, and more preferably 66 or more. The value of [{S2/(S2 + S1)} × 100] is preferably 95 or less, and more preferably 90 or less.

Examples of the means for adjusting the value of [{S2/(S2 + S1)} × 100] to the above range include a method for increasing the low molecular weight component by quickly completing the polymerization of the polyamide resin, and a method for mixing at least two aliphatic polyamide resins each having a different molecular weight.
Since the value of [{S2/(S2 + S1)} × 100] can be finely adjusted by adjusting the amount of an aliphatic polyamide resin having a relatively low weight-average molecular weight to be formulated, two or more aliphatic polyamide resins are preferably mixed.

The aliphatic polyamide resin preferably has a melting point by differential scanning calorimetry (DSC measurement) of 170°C or more and 190°C or less. The lower limit value of the melting point is more preferably 172°C or more, and particularly preferably 175°C or more. The upper limit value of the melting point is more preferably 188°C or less, further preferably 187°C or less, and particularly preferably 185°C or less. When the melting point falls within the range, both tube formability and hydrolysis resistance can be achieved. The melting point of the aliphatic polyamide resin by differential scanning calorimetry (DSC measurement) can be increased or reduced by the composition ratio, relative viscosity, and molecular weight of each component.

The aliphatic polyamide resin preferably has a crystallization temperature by differential scanning calorimetry (DSC measurement) of 130°C or more and 160°C or less. The lower limit value of the crystallization temperature is more preferably 135°C or more, and particularly preferably 140°C or more. The upper limit value of the crystallization temperature is more preferably 157°C or less, and particularly preferably 155°C or less. This enables tube formability to be stabilized. The crystallization temperature of the aliphatic polyamide resin by differential scanning calorimetry (DSC measurement) can be increased or reduced by the composition ratio, relative viscosity, and molecular weight of each component.

The aliphatic polyamide resin preferably has a relative viscosity of 1.80 or more and 2.10 or less. The lower limit value of the relative viscosity is more preferably 1.85 or more, and particularly preferably 1.90 or more. The upper limit value of the relative viscosity is more preferably 2.09 or less, and particularly preferably 2.08 or less. When the relative viscosity is the above upper limit value or less, tube formability is excellent. When the relative viscosity is the above lower limit value or more, hydrolysis resistance is excellent. As used herein, ηr (relative viscosity) is a value measured at 25°C by using 100 ml of 96% by mass concentrated sulfuric acid as a solvent and dissolving the aliphatic polyamide resin therein in a polyamide concentration of 1 g/100 ml (JIS K 6920).

### <Polyolefin>

A polyolefin is contained in the polyamide resin composition of the present invention. A known material may be used as the polyolefin, and the polyolefin of the present invention preferably functions as an impact resistance improving agent. The polyolefin preferably has a surface hardness (shore A) measured in accordance with ASTM D2240 of 80 or less.

As the polyolefin, one having a functional group exhibiting reactivity with the terminal group of the polyamide resin is used. Specific examples thereof include a copolymer which has an (ethylene and/or propylene)/α-olefin copolymer as the main backbone and at least a part of which has a functional group exhibiting reactivity with the terminal group of the aliphatic polyamide resin; and an (ethylene and/or propylene)/(α,β-unsaturated carboxylic acid and/or α,β-unsaturated carboxylic acid ester) copolymer. These may be used individually or in combination of two or more thereof. The polyolefin is also preferably one containing an ethylene/α-olefin copolymer as the main backbone.

The (ethylene and/or propylene)/α-olefin copolymer is a polymer obtained by copolymerizing ethylene and/or propylene with an α-olefin having 3 or more or 4 or more carbon atoms.

Examples of the α-olefin having 3 or more carbon atoms include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene, and 12-ethyl-1-tetradecene. These may be used individually or in combination of two or more thereof.

The copolymer may be one obtained by copolymerizing a polyene such as a non-conjugated diene. Examples of the non-conjugated diene include 1,4-pentadiene, 1,4-hexadiene, 1,5-hexadiene, 1,4-octadiene, 1,5-octadiene, 1,6-octadiene, 1,7-octadiene, 2-methyl-1,5-hexadiene, 6-methyl-1,5-heptadiene, 7-methyl-1,6-octadiene, 4-ethylidene-8-methyl-1,7-nonadiene, 4,8-dimethyl-1,4,8-decatriene (DMDT), dicyclopentadiene, cyclohexadiene, cyclooctadiene, 5-vinylnorbornene, 5-ethylidene-2-norbornene, 5-methylene-2-norbornene, 5-isopropylidene-2-norbornene, 6-chloromethyl-5-isopropenyl-2-norbornene, 2,3-diisopropylidene-5-norbornene, 2-ethylidene-3-isopropylidene-5-norbornene, and 2-propenyl-2,5-norbornadiene. These may be used individually or in combination of two or more thereof.

The (ethylene and/or propylene)/(α,β-unsaturated carboxylic acid and/or α,β-unsaturated carboxylic acid ester) copolymer is a polymer obtained by copolymerizing ethylene and/or propylene with an α,β-unsaturated carboxylic acid and/or an α,β-unsaturated carboxylic acid ester monomer. Examples of the α,β-unsaturated carboxylic acid monomer include acrylic acid and methacrylic acid. Examples of the α,β-unsaturated carboxylic acid ester monomer include methyl esters, ethyl esters, propyl esters, butyl esters, pentyl esters, hexyl esters, heptyl esters, octyl esters, nonyl esters, and decyl esters of these α,β-unsaturated carboxylic acids. These may be used individually or in combination of two or more thereof.

**In** the (ethylene and/or propylene)/α-olefin copolymer, at least a part thereof preferably has a functional group that reacts with the terminal amino group of the aliphatic polyamide resin. Although the (ethylene and/or propylene)/(α,β-unsaturated carboxylic acid and/or α,β-unsaturated carboxylic acid ester) copolymer already has the above functional group, it may further have a different functional group that reacts with the terminal amino group of the aliphatic polyamide resin.

Examples of the functional group include a carboxy group, an acid anhydride group, a carboxylic acid ester group, a metal carboxylate, a carboxylic acid imide group, a carboxylic acid amide group, and an epoxy group. Among these groups, those capable of forming a salt may be in the form of a corresponding salt. **In** an acidic functional group, a metal salt with a typical metal or a transition metal may be formed, and in a basic functional group, an ammonium salt or the like may be formed.

Examples of the compounds containing these functional groups include acrylic acid, methacrylic acid, maleic acid, fumaric acid, itaconic acid, crotonic acid, mesaconic acid, citraconic acid, glutaconic acid, cis-4-cyclohexene-1,2-dicarboxylic acid, endobicyclo-[2.2.1]-5-heptene-2,3-dicarboxylic acid, and metal salts of these carboxylic acids, monomethyl maleate, monomethyl itaconate, methyl acrylate, ethyl acrylate, butyl acrylate, 2-ethylhexyl acrylate, hydroxyethyl acrylate, methyl methacrylate, 2-ethylhexyl methacrylate, hydroxyethyl methacrylate, aminoethyl methacrylate, dimethyl maleate, dimethyl itaconate, maleic anhydride, itaconic anhydride, citraconic anhydride, endobicyclo-[2.2.1]-5-heptene-2,3-dicarboxylic acid anhydride, maleimide, N-ethylmaleimide, N-butylmaleimide, N-phenylmaleimide, acrylamide, methacrylamide, glycidyl acrylate, glycidyl methacrylate, glycidyl ethacrylate, glycidyl itaconate, and glycidyl citraconate. These may be used individually or in combination of two or more thereof. Among these, maleic anhydride, itaconic anhydride, and citraconic anhydride are preferred.

Examples of the method for introducing these functional groups into the polymer to be used in the polyolefin include (i) a method for copolymerizing a copolymerizable monomer having the functional group during polymerization of the polymer, (ii) a method for introducing the functional group into the molecular chain or molecular terminal of the polymer using a polymerization initiator, a chain transfer agent, or the like, and (iii) a method for grafting a compound that has the functional group and a graftable functional group (graftable compound) on the polymer. These introduction methods may be used individually or in appropriate combination thereof.

The content of the functional group, such as an acid anhydride group or a carboxylic acid ester group, contained per 1 g of the polyolefin (the amount of the functional group [C1]) is preferably more than 25 µmol/g and less than 100 µmol/g, more preferably 35 µmol/g or more and less than 95 µmol, and further preferably 40 µmol/g or more and 90 µmol/g or less. With the content of more than 25 µmol/g, a composition having high melt viscosity can be obtained, and an intended thickness dimension can be obtained in tube forming. With the content of less than 100 µmol/g, the melt viscosity is not too high, a load on an extruder is suppressed, and forming processing can be favorably carried out. For example, when the polyolefin has a carboxy group, an acid anhydride group, or a carboxylic acid ester group, the content of the functional group contained in the polyolefin is measured by subjecting a sample solution prepared using a mixed solution of xylene/ethanol to neutralization titration with a 0.1 N KOH ethanol solution using phenolphthalein as an indicator. The polyolefin may be used in combination with a polyolefin having no functional group exhibiting reactivity with the terminal group of the polyamide resin, and such a polyolefin is preferably used in an amount such that the content of the functional group based on the whole polyolefin falls within the above range.

In the polyamide resin composition of the present invention, the amount of the functional group of the polyolefin [C1] and the amount of the amino group of the aliphatic polyamide resin [A1] are preferably controlled so that the product of the amounts of the functional groups of both of them is 1000 to 5000 ((µmol/g)²).

The polyolefin preferably has an MFR measured at a temperature of 190°C and a load of 2.16 kg in accordance with ISO1133 of 2 g/10 min or less, and when the polyolefin falls within the above range, the MFR of the whole polyamide resin composition is easily retained in a favorable range.

### <Polyamide resin composition>

The polyamide resin composition of the present invention is a composition containing the above aliphatic polyamide resin and the above polyolefin. The contents of both of them are such that the mass ratio of the content of the polyolefin (B) to the total mass of the content of the aliphatic polyamide resin (A) and the content of the polyolefin (B), [(B)/ {(A)+(B)}], is 0.15 to 0.40. That is, the amount of the aliphatic polyamide resin is within a range of 60 to 85% by mass per 100% by mass in total of the aliphatic polyamide resin and the polyolefin. With respect to the content of the aliphatic polyamide resin, [(B)/{(A)+(B)}] is preferably 0.17 to 0.38, more preferably 0.18 to 0.37, and particularly preferably 0.20 to 0.36. That is, the content of the aliphatic polyamide resin is preferably 62% by mass or more, more preferably 63% by mass or more, and particularly preferably 64% by mass or more. The content of the aliphatic polyamide resin is preferably 83% by mass or less, more preferably 82% by mass or less, and particularly preferably 80% by mass or less.

### (Amount of functional group of polyolefin [C2] in polyamide resin composition)

The amount of the functional group of the polyolefin [C2] in the polyamide resin composition is preferably 5 µmol/g or more and less than 70 µmol/g, more preferably 7 µmol/g or more and 50 µmol or less, and further preferably 8 µmol/g or more and 40 µmol/g or less. With the content of more than 5 µmol/g, a composition having high melt viscosity can be obtained, and an intended thickness dimension can be obtained in tube forming. With the content of less than 100 µmol/g, the melt viscosity is not too high, a load on an extruder is suppressed, and forming processing can be favorably carried out.

The amount of the functional group of the polyolefin [C2] in the polyamide resin composition is measured as follows: a sample solution obtained by preparing the polyamide resin composition using benzyl alcohol is subjected to neutralization titration with a 0.1 N KOH ethanol solution using phenolphthalein as an indicator. Alternatively, it may be determined based on the composition ratio and the amount of the functional group of each polyolefin.

### (Amount of amino group of aliphatic polyamide [A2] in polyamide resin composition)

From the viewpoint of making the flowability of the polyamide resin composition more favorable, the amount of the amino group of the aliphatic polyamide resin [A2] in the polyamide resin composition is preferably more than 20 µmol/g and less than 95 µmol/g, more preferably 30 µmol/g or more and less than 90 µmol/g, and further preferably 35 µmol/g or more and 85 µmol/g or less. In general, [A2] is smaller than the amount of the amino group of the aliphatic polyamide resin [A1].

The amount of the amino group of the aliphatic polyamide resin in the polyamide resin composition is measured by dissolving the polyamide resin composition in a mixed solution of phenol/methanol and titrating the mixture with 0.05 N hydrochloric acid. Alternatively, it may be determined based on the composition ratio and the amount of the functional group of each polyolefin.

### (Product of amount of functional group of polyolefin [C2] and amount of amino group of aliphatic polyamide resin [A2])

In the polyamide resin composition of the present invention, the amount of the functional group of the polyolefin [C2] per 1 g of the polyamide resin composition and the amount of the amino group of the aliphatic polyamide resin [A2] per 1 g of the polyamide resin composition is preferably designed so that the product of the amounts of the functional groups of both of them is 250 to 750 ((µmol/g)²).

The method for mixing the aliphatic polyamide resin and the polyolefin is not particularly limited. Various additives may be formulated if necessary, and conventionally known various methods may be employed. For example, the aliphatic polyamide resin and the polyolefin may be produced by a method in which pellets of the aliphatic polyamide resin and the polyolefin are uniformly dry-blended using a tumbler or a mixer so as to achieve the above mixing proportion, or a method in which they are previously dry-blended, if necessary, together with a further component to be added, in a concentration to be used during forming, and the mixture is then melt-kneaded. Melt-kneading may be carried out using a kneading machine such as a single-screw extruder, a twin-screw extruder, a kneader, or a Banbury mixer.

### (Additive)

Further, an antioxidant, a heat-resistant agent, an ultraviolet absorber, a light stabilizer, a weathering agent, a glidant, an inorganic filler, an antistatic agent, a retardant, a crystallization accelerator, a plasticizer, a colorant, a lubricant, or the like may be added to the polyamide resin composition, if necessary. As these additives, commercially available various materials known to those skilled in the art may be used.

An antioxidant is preferably added to the polyamide resin composition. Examples of organic antioxidants include a phenol antioxidant, a phosphorus antioxidant, and a sulfur antioxidant.

Preferred examples of the phenol antioxidant include a hindered phenol antioxidant. As used herein, the hindered phenol refers to a compound having a substituent at the ortho-position (hereinafter, also referred to as "o-position") to a hydroxyl group of phenol. The substituent at the o-position is not particularly limited, and examples thereof include an alkyl group, an alkoxy group, an amino group, and a halogen. Among these, an alkyl group such as a methyl group, an ethyl group, an n-propyl group, an i-propyl group, an n-butyl group, a sec-butyl group, an i-butyl group, or a tert-butyl group is preferred, a bulky i-propyl group, sec-butyl group, i-butyl group, or tert-butyl group is more preferred, and a tert-butyl group is most preferred. Such a substituent is preferably contained at each of the two o-positions to a hydroxyl group of phenol.

As the hindered phenol having a tert-butyl group at the o-position, a commercial product may be used, and specific examples thereof include N,N'-(hexane-1,6-diyl)bis[4-hydroxy-3,5-bis(tert-butyl)benzenepropaneamide (Irganox(R) 1098; manufactured by BASF Japan Ltd.), pentaerythritol=tetrakis[3-(3,5-di-tert-butyl-4'-hydroxyphenyl)propionate (Irganox(R) 1010; manufactured by BASF Japan Ltd.), ethylenebis(oxyethylene)bis[3-(5-tert-butyl-4-hydroxy-m-tolyl)propionate] (Irganox(R) 245; manufactured by BASF Japan Ltd.), and 3,9-bis[2-[3-(3-tert-butyl-4-hydroxy-5-methylphenyl)propionyloxy]-1,1-dimethylethyl]-2,4,8,10-tetraoxaspiro[5.5]undecane (SUMILIZER(R) GA-80; manufactured by SUMITOMO CHEMICAL COMPANY, LIMITED). These may be used individually or in combination of two or more thereof.

The phosphorus antioxidant is preferably a phosphite compound of the hindered phenol or a hypophosphite compound of the hindered phenol, more preferably a phosphite compound of the hindered phenol having a tert-butyl group at the o-position or a hypophosphite compound of the hindered phenol having a t-butyl group at the o-position, and further preferably a phosphite compound of the hindered phenol having a t-butyl group at the o-position. As these compounds, commercial products may be used, and specific examples of the phosphite compound of the hindered phenol having a t-butyl group at the o-position include tris(2,4-di-tert-butylphenyl) phosphite (Irgafos(R) 168; manufactured by BASF Japan Ltd.). Specific examples of the hypophosphite compound of the hindered phenol having a tert-butyl group at the o-position include 3,9-bis(2,6-di-tert-butyl-4-methylphenoxy)-2,4,8,10-tetraoxa-3,9-diphosphaspiro[5.5]undecane (ADK STAB(R) PEP-36; manufactured by ADEKA Corporation), a biphenyl that contains p,p,p',p'-tetrakis(2,4-di-tert-butylphenoxy)-4,4'(or 3',4)-biphenyldiphosphine as the main component, and a reaction product of phosphorus trichloride and 2,4-di-tert-butylphenol (Hostanox(R) P-EPQ(R) P; manufactured by Clariant (Japan) K.K.). These may be used individually or in combination of two or more thereof.

Examples of the sulfur antioxidant include distearyl-3,3-thiodipropionate, pentaerythrityl tetrakis(3-laurylthiopropionate), and didodecyl(3,3'-thiodipropionate). These may be used individually or in combination of two or more thereof.

These organic antioxidants may be used individually or in combination of two or more thereof.

A further polyamide resin or a further thermoplastic resin may be added to the polyamide resin composition. Examples of such a resin capable of being added include the polyamide resins and thermoplastic resins described in the paragraphs 0054 to 0055 in WO 2015/033982. Such resins may be used individually or as a mixture of two or more thereof.

In the polyamide resin composition of the present invention, the MFR at 300°C in an amount of 5000 g is 0.01 g/10 min or more and 20 g/10 min or less. Within this range, the resin is suitable for the forming of a tube without exhibiting excess flowability. The MFR is preferably 0.05 g/10 min or more, and more preferably 0.10 g/10 min or more. The MFR is preferably 15 g/10 min or less, and more preferably 10 g/10 min or less. The MFR is a value measured when 5000 g of the resin composition is heated to 300°C in accordance with ISO 1133.

### <Formed product>

The polyamide resin composition of the present invention may be used in a hollow formed product for carrying particularly a coolant. As long as the polyamide resin composition is a hollow formed product, the shape is not limited, and it may take various shapes such as a tube, a hose, and a pipe. In general, a resin that can be subjected to injection molding without problem tends to be unsuitable for tube forming. The production of a hollow formed product, such as a tube or a hose, requires continuously extruding a resin from an extruder in a certain amount and solidifying the extruded resin without changing its shape, which is different from injection molding in which the resin is basically flowed into a mold. When the pulsation of the resin is caused during extrusion process, the thickness of the tube may be uncertain, and a point weak against pressure may be produced. In addition, when the flowability of the resin is too high, liquid sagging may be caused before curing, and a hollow formed product having a uniform shape cannot be obtained. Thus, the resin for tube forming is required to have flowability in a moderate range and to be uniformly and continuously formed. The present inventors have found that the polyamide resin composition of the present invention is a resin having characteristics satisfying these demands and is suitable for tube forming.

The polyamide resin composition of the present invention may be a hollow formed product of a single layer. Although the polyamide cannot be essentially escaped from hydrolysis, the polyamide resin composition of the present invention has a significantly high effect even in use as a single layer in terms that it can be utilized for carrying a fluid even when a coolant contains water.

The polyamide resin composition of the present invention can be basically used as a single layer, and may optionally be formed into a formed product having a layer structure of two or more layers. The layer containing the polyamide resin composition of the present invention may be used in any of an inner layer, an outer layer, and an intermediate layer, and may be designed according to the application of the resin to be used as the second layer. As the resin that can be utilized in combination in a layered tube, those known to the skilled in the art, such as a fluorine-containing polymer in which a functional group exhibiting reactivity with an amino group is introduced into the molecular chain; a polyolefin polymer; a thermoplastic resin composition optionally containing a conductive filler; and a polyamide other than the above aliphatic polyamide resin, such as an aromatic polyamide using terephthalic acid, such as PA6T, and an aliphatic polyamide mainly constituted of short-chain alkylene groups, may be used depending on the position to be arranged and desired characteristics.

**In** the case of a layered tube, the thickness of the layer of the polyamide resin composition of the present invention is not particularly limited, and may be modulated depending on the type of polymer constituting each layer, the total number of layers in the layered tube, the application, and the like. **In** general, the thickness of the layer of the polyamide resin composition of the present invention is preferably 3% or more and 90% or less based on the thickness of the whole layered tube.

With respect to the method for producing a tube, the tube may be formed by a known method such as extrusion forming or hollow molding, according to an ordinary method. **In** extrusion forming, a molten resin is cooled while being injected into a circular metal die to form a tube. Since tubes having any length can be produced with a relatively simple process, a tube as a normal infusion tube is easily formed by extrusion forming, which is preferred. As an extruder, a single-screw extruder or a multi-screw extruder may be used. **In** hollow molding, a hollow product called parison is formed, and then molded by air pressure from the inside. **In** the forming of a complex shape, these methods may be used.

When the tube is a multilayer tube, examples of the production method thereof include a method in which the resin is melt-extruded using an extruder corresponding to the number of layers or the number of materials, and simultaneously layering the extruded resin inside or outside a die (coextrusion); or a method in which a single layer tube or a layered tube produced by the above method is previously produced first, and the resin is sequentially layered on the outer side thereof by using, if necessary, an adhesive to integrate the resin therewith (coating).

When the tube to be obtained has a complex shape or the resin is formed and then subjected to heat-bending to obtain a formed article, an intended formed article may also be obtained by forming the above tube and then subjecting the tube to heat treatment at a temperature less than the melting point of the resin that constitutes the tube for 0.01 hours or more and 10 hours or less to remove the residual strain of the formed article.

The tube may have a waveform region. The waveform region refers to a region formed into a waveform shape, a bellows shape, an accordion shape, a corrugated shape, or the like. The tube may have a waveform region not only over the whole length of a layered tube, but also in an appropriate partial region in the middle thereof. The waveform region can be easily formed by forming a straight tube at first, and then subsequently molding the straight tube to have a predetermined waveform shape or the like. By having such a waveform region, the tube has impact absorption properties, and attachment is easy. Further, for example, necessary parts such as a connector may be added, or the tube may be formed into an L-shape, a U-shape, or the like by bending.

Considering stone splash, wear with other parts, and flame resistance, a solid or spongy protection member (protector) constituted of natural rubber (NR), butadiene rubber (BR), isoprene rubber (IR), butyl rubber (IIR), chloroprene rubber (CR), carboxylic butadiene rubber (XBR), carboxylic chloroprene rubber (XCR), epichlorohydrin rubber (ECO), acrylonitrile butadiene rubber (NBR), hydrogenated acrylonitrile butadiene rubber (HNBR), carboxylic acrylonitrile butadiene rubber (XNBR), a mixture of NBR and polyvinyl chloride, acrylonitrile isoprene rubber (NIR), chloropolyethylene rubber (CM), chlorosulfonylpolyethylene rubber (CSM), ethylene propylene rubber (EPR), ethylene propylene diene rubber (EPDM), ethylene vinyl acetate rubber (EVM), mixture rubber of NBR and EPDM, acrylic rubber (ACM), ethylene acrylate rubber (AEM), acrylate butadiene rubber (ABR), styrene butadiene rubber (SBR), carboxylic styrene butadiene rubber (XSBR), styrene isoprene rubber (SIR), styrene isoprene butadiene rubber (SIBR), urethane rubber, silicone rubber (MQ, VMQ), fluoro rubber (FKM, FFKM), fluorosilicone rubber (FVMQ), or any of vinyl chloride, olefin, ester, urethane, and amide thermoplastic elastomers, or the like may be arranged on the whole or a part of the circumference of the tube thus formed. The protection member may be formed into a spongy porous material by a known method. By forming the protection member into a porous material, a protection part having a light weight and excellent heat-insulating properties can be formed. In addition, material cost can also be reduced. Alternatively, the strength thereof may be improved by adding glass fiber or the like. The shape of the protection member is not particularly limited, and is typically a block member having a cylindrical member or a recessed part that houses the layered tube. The cylindrical member may be produced by inserting the tube into a previously produced cylindrical member later, or by extrusion-coating a cylindrical member on the tube to closely adhere them to each other. To adhere the tube and the protection member to each other, an integrated structure of both of them is formed by applying an adhesive to the inner surface of the protection member or the recess surface if necessary, inserting or fitting the tube thereinto, and closely adhering them to each other. **In** addition, the integrated structure may be reinforced with a metal or the like.

Considering the flow rate of a chemical solution (e.g., a fuel such as alcohol-containing gasoline) and the like, the outer diameter of the tube may be designed to have a thickness without limitation such that the amount of chemical permeation does not increase, the breaking pressure of a typical tube can be maintained, and flexibility in an extent allowing the easy assembling workability of the tube and the vibration resistance during use to be favorable can be maintained. The outer diameter is preferably 4 mm or more and 300 mm or less, the internal diameter is preferably 3 mm or more and 250 mm or less, and the thickness is preferably 0.5 mm or more and 25 mm or less.

The tube using the polyamide resin composition of the present invention may be used in mechanical parts such as automotive parts, internal combustion engine applications, and power tool housings, and various applications such as industrial materials, electrical and electronic components, medical treatments, foods, home and office supplies, building material parts, and furniture parts.

The tube using the polyamide resin composition of the present invention has excellent chemical permeation preventing properties, and is thus suitable for a chemical delivery tube. Examples of the chemical include aromatic hydrocarbon solvents such as benzene, toluene, and xylene; alcohols such as methanol, ethanol, propanol, butanol, pentanol, ethylene glycol, propylene glycol, diethylene glycol, phenol, cresol, polyethylene glycol, and polypropylene glycol; phenol solvents; ether solvents such as dimethyl ether, dipropyl ether, methyl-tert-butyl ether, ethyl-t-butyl ether, dioxane, and tetrahydrofuran; halogen solvents such as chloroform, methylene chloride, trichloroethylene, ethylene dichloride, perchloroethylene, monochloroethane, dichloroethane, tetrachloroethane, perchloroethane, and chlorobenzene; ketone solvents such as acetone, methyl ethyl ketone, diethyl ketone, and acetophenone; gasoline, kerosene, diesel gasoline, alcohol-containing gasoline, ethyl-t-butyl ether blended oxygen-containing gasoline, amine-containing gasoline, sour gasoline, castor oil-based brake fluid, glycol ether brake fluid, boric acid ester brake fluid, brake fluid for an extremely cold region, silicone oil brake fluid, mineral oil brake fluid, power steering oil, hydrogen sulfide-containing oil, window washer fluid, coolants of engines and the like in vehicles, urea solutions, medicaments, inks, and paints. The layered tube of the present invention is suitable for a tube for delivering the above chemical solution, and specific examples thereof include fuel tubes such as feed tubes, return tubes, evaporation tubes, fuel filler tubes, ORVR tubes, reserve tubes, and vent tubes; oil tubes, oil-drilling tubes, brake tubes, window washer fluid tubes, engine coolant (LLC) tubes, reservoir tank tubes, urea solution delivery tubes, cooling water, cooler tubes for refrigerants and the like, air conditioner refrigerant tubes, heater tubes, road heating tubes, floor heating tubes, infrastructure supply tubes, tubes for fire extinguishers and fire extinguishing installation, tubes for medical cooling equipment, inks, coating material sprinkling tubes, and other chemical solution tubes. In particular, the laminated tube of the present invention is suitable for a tube for delivering an automobile coolant containing ethylene glycol or water.

### Examples

Hereinafter, the present invention will be more specifically described with reference to Examples and Comparative Examples, but the present invention is not limited by these Examples. The components used in Examples and Comparative Examples and the methods for measuring the physical properties of formed articles are shown below.

### [Constitutional component] (A) Aliphatic polyamide resin

(A-1) Polyamide 12 (manufactured by UBE Corporation, [CH2]/[NHCO] = 11, relative viscosity = 2.23, amount of amino group (amount of terminal amino group) = 58 µmol/g)
(A-2) Polyamide 12 (manufactured by UBE Corporation, [CH2]/[NHCO] = 11, relative viscosity = 1.90, amount of amino group (amount of terminal amino group) = 81 µmol/g)
(A-3) Polyamide 12 (manufactured by UBE Corporation, [CH2]/[NHCO] = 11, relative viscosity = 1.68, amount of amino group (amount of terminal amino group) = 24 µmol/g)

The relative viscosity is measured at 25°C by the method in accordance with JIS K 6920 using a solution obtained by dissolving 1 g of the polyamide resin in 100 ml of 96% sulfuric acid.

The amount of the amino group is measured by dissolving the polyamide resin in a mixed solution of phenol/methanol (7/3 (volume ratio)) and titrating the mixture with 0.05 N hydrochloric acid.

The amount of the amino group of each aliphatic polyamide resin [A1] shown in Table 1 was determined based on the composition ratio and the amount of the amino group.

### (B) Polyolefin

(B-1) Maleic anhydride-modified ethylene/1-butene copolymer (TAFMER(R) MH5010 manufactured by Mitsui Chemicals, Inc., amount of functional group (amount of maleic anhydride group) = 50 µmol/g)
(B-2) Maleic anhydride-modified ethylene/1-butene copolymer (TAFMER(R) MH5020 manufactured by Mitsui Chemicals, Inc., amount of functional group (amount of maleic anhydride group) = 100 µmol/g)
(B-3) Unmodified ethylene/1-butene copolymer (TAFMER(R) DF740 manufactured by Mitsui Chemicals, Inc.)

The amount of the functional group of the polyolefin is measured by subjecting a sample solution prepared using a mixed solution of xylene/ethanol (9/1 (volume ratio)) to neutralization titration with a 0.1 N KOH ethanol solution using phenolphthalein as an indicator.

The amount of the functional group of each polyolefin [C1] shown in Table 1 was determined based on the composition ratio and the amount of the functional group.

In addition to the above polyamides and polyolefins, a hindered phenol antioxidant (Irganox(R) 245 manufactured by BASF JAPAN LTD.), a phosphorus processing stabilizer (Irgafos(R) 168 manufactured by BASF JAPAN LTD.), and an organic sulfur secondary antioxidant (Sumilizer(R) TP-D manufactured by SUMITOMO CHEMICAL COMPANY, LIMITED) were used as antioxidants, and carbon black (VULCAN(R) 9A32 manufactured by Cabot Corporation) was used as a colorant.

### <Examples>

The aliphatic polyamide resin, the polyolefin, and the additive were melt-kneaded in the composition shown in Table 1 with a twin-screw melt-kneading machine to produce the pellet of each polyamide resin composition. As Comparative Examples, the pellet of each polyamide resin composition was produced in the composition shown in Table 1 in the same manner, except that no polyolefin was added (Comparative Example 1), the amount of the polyolefin was reduced to 10 parts by mass (Comparative Example 2), and the kind and amount of aliphatic polyamide were changed (Comparative Examples 3 to 8). The composition of respective components in the compositions of Examples and Comparative Examples are shown in Table 1. The numerical value is % by mass.

### <Measurement of physical properties and evaluation>

The measurement of physical properties and evaluation of the polyamide resin compositions obtained in Examples and Comparative Examples were carried out as follows.

### (Value of [{S2/(S2 + S1)} × 100] (GPC))

As an index of achieving both the formability and the long-term LLC (coolant) resistance of the tube, the molecular weight distribution of the polyamide resin composition in terms of polymethyl methacrylate by gel permeation chromatography (GPC) was calculated. In a molecular weight distribution curve in terms of polymethyl methacrylate, the value of [{S2/(S2 + S1)} × 100] was determined as an index of the content of low molecular weight components, in which S1 represents an area of a portion bounded by the molecular weight distribution curve from a point having a highest molecular weight among points corresponding to a weight fraction of 70% when the weight fraction of the most frequent value of the molecular weight distribution curve is defined as 100% to a molecular weight maximum value and an abscissa corresponding to a weight fraction of 0%, and S2 represents an area of a portion bounded by the molecular weight distribution curve from a point having a lowest molecular weight among the points corresponding to the weight fraction of 70% to a molecular weight minimum value and the abscissa corresponding to the weight fraction of 0%.

### (Amount of functional group of polyolefin [C2] in polyamide resin composition)

The amount of the functional group of the polyolefin [C2] in the polyamide resin composition is measured as follows: a sample solution obtained by preparing the polyamide resin composition using a mixed solution of xylene and ethanol is subjected to neutralization titration with a 0.1 N KOH ethanol solution using phenolphthalein as an indicator. Alternatively, it may be determined based on the composition ratio and the amount of the functional group of each polyolefin.

### (Amount of amino group of aliphatic polyamide resin [A2] in polyamide resin composition)

The amount of the amino group of the aliphatic polyamide resin in the polyamide resin composition is measured by dissolving the polyamide resin composition in a mixed solution of phenol/methanol and titrating the mixture with 0.05 N hydrochloric acid. Alternatively, it may be determined based on the composition ratio and the amount of the functional group of each polyolefin.

### (Amount of functional group of polyolefin [C2] in polyamide resin composition × amount of amino group of aliphatic polyamide resin)

The amount of the functional group of the polyolefin [C2] in the polyamide resin composition × the amount of the amino group of the aliphatic polyamide resin is the product of the amount of the functional group of the polyolefin in the polyamide resin composition and the amount of the amino group of the aliphatic polyamide resin in the polyamide resin composition.

### [Kneading stability]

In the production of the pellets of Examples 1 to 6 and Comparative Examples 1 to 5, the kneading stability when a melt-kneaded product is extruded in a strand shape with a twin-screw melt-kneading machine was evaluated by the following criteria.
O (Good): Stable extrusion of a strand is possible.
× (Poor): Stable extrusion into a strand shape is impossible. (For example, the melt-kneaded product cannot be extruded into a strand shape, or even when the melt-kneaded product can be extruded into a strand shape, the strand is thin, thick, or broken in the middle.)

### [Resin pressure]

The resin pressure upon melt-kneading at a barrel temperature of 240°C with a twin-screw melt-kneading machine was measured. In the measurement, a pressure gauge was attached to the kneading machine, and the value thereof was read. When the pressure is low, the load on the apparatus can be reduced, and pellets can be stably produced. A resin pressure of 10 MPa or less was determined that the productivity is favorable, and a resin pressure of 8 MPa or less was determined that the productivity is particularly excellent.

### [Tube formability]

The formability of a tube by an extrusion machine was evaluated by the following criteria.
O (Good): Continuous forming is possible, no pulsation is caused, and the tube can be stably formed.
△ (Fair): Pulsation is caused, and while the tube dimension is slightly unstable, continuous forming is sufficiently possible.
× (Poor): Continuous forming of the tube is impossible, and pulsation is caused.

### [Flowability (MFR)]

As the index of the flowability of the polyamide resin composition, MFR (temperature: 300°C and load: 5,000 g) measurement was carried out by the method in accordance with ISO 1133. An MFR of 0.1 to 20 g/10 min was determined that the flowability is favorable.

### [Production of test specimen]

With respect to each polyamide resin composition, a test specimen was produced in accordance with ISO 294-1 using an injection molding machine SE100D-C160S manufactured by Sumitomo Heavy Industries, Ltd.

### [Toughness (tensile elongation at break)]

The tensile elongation at break was measured by the method in accordance with ISO 527-1 and 2 using the obtained test specimen. A tensile elongation at break of 150% or more was determined that the toughness is sufficient, and a tensile elongation at break of 170% or more was determined that the toughness is particularly excellent.

### (Hydrolysis resistance)

The obtained test specimen was immersed in a sealed autoclave filled with a coolant (water/ethylene glycol = 50/50 mass ratio), and heated at 120°C for 1000 hours. Thereafter, the test specimen was taken out and the tensile elongation at break thereof was measured by the method in accordance with ISO 527-1 and 2. The tensile elongation at break after immersion when the tensile elongation at break before immersion is 100% was defined as the tensile elongation at break retention rate.
The hydrolysis resistance was evaluated by the following criteria.
O (Good): The case where all of a tensile elongation at break after the coolant immersion test of 40% or more and a tensile elongation at break retention rate after the coolant immersion test of 15% or more are satisfied
× (Poor): The case where either one of a tensile elongation at break after the coolant immersion test of 40% or more and a tensile elongation at break retention rate after the coolant immersion test of 15% or more is not satisfied

### [Table 1]

**Table 1**

| | | | | Example 1 | Example 2 | Example 3 | Example 4 | Example 5 | Example 6 | Comparative Example 1 | Comparative Example 2 | Comparative Example 3 | Comparative Example 4 | Comparative Example 5 |
|---|---|---|---|---|---|---|---|---|---|---|---|---|---|---|
| Composition | Polyamide | (A-1) | wt% | 62.81 | 58.81 | 58.81 | 57.16 | 57.16 | 57.16 | 78.81 | 70.81 | | | |
| | | (A-2) | wt% | | | | | | | | | 82.96 | 77.96 | 71.46 |
| | | (A-3) | wt% | 15.15 | 14.15 | 14.15 | 14.30 | 14.30 | 13.80 | 19.15 | 17.15 | | | |
| | Polyolefin | (B-1) | wt% | 20.00 | 24.00 | 25.00 | 15.00 | 10.00 | 27.00 | | 10.00 | 15.00 | 20.00 | 25.00 |
| | | (B-2) | wt% | | | | 10.00 | 15.00 | | | | | | |
| | | (B-3) | wt% | | 1.00 | | | | | | | | | |
| | Others | Irganox245 | wt% | 1.00 | 1.00 | 1.00 | 0.90 | 0.90 | 1.00 | 1.00 | 1.00 | 1.00 | 1.00 | 0.90 |
| | | Irgafos168 | wt% | 0.20 | 0.20 | 0.20 | 0.10 | 0.10 | 0.20 | 0.20 | 0.20 | 0.20 | 0.20 | 0.10 |
| | | Sumilizer TP-D | wt% | 0.54 | 0.54 | 0.54 | 0.54 | 0.54 | 0.54 | 0.54 | 0.54 | 0.54 | 0.54 | 0.54 |
| | | Carbon black | wt% | 0.30 | 0.30 | 0.30 | 2.00 | 2.00 | 0.30 | 0.30 | 0.30 | 0.30 | 0.30 | 2.00 |
| GPC | | GPC [S2/(S1+S2)×100] | - | 68.8 | 69.0 | 69.0 | 69.2 | 69.2 | 69.3 | 68.1 | 68.0 | 63.3 | 62.8 | 63.1 |
| Evaluation | Productivity | Kneading stability | - | ○ | ○ | ○ | ○ | ○ | ○ | ○ | ○ | ○ | ○ | ○ |
| | | Resin pressure | MPa | 5.60 | 5.90 | 5.70 | 6.90 | 7.60 | 5.80 | 3.10 | 4.00 | 2.60 | 2.80 | 3.00 |
| | Formability | Tube formability | - | ○ | ○ | ○ | ○ | ○ | ○ | △ | ○ | × | △ | △ |
| | Flowability | MFR(300°C, 5,000g) | g/1Omin | 2.89 | 0.53 | 0.99 | 0.25 | 0.13 | 0.56 | -* | 34.21 | -* | -* | -* |
| | Toughness | Tensile elongation at break (ISO 527-1,2) | % | 218 | 191 | 209 | 181 | 176 | 215 | 295 | 298 | 278 | 283 | 300 |
| | Hydrolysis resistance | Tensile elongation at break retention rate after immersion test of 120°C × 1000 h | % | 40 | 52 | 66 | 96 | 67 | 194 | 15 | 42 | 72 | 154 | 254 |
| | | Tensile elongation at break retention rate after immersion test of 120°C × 1000 h | % | 18 | 27 | 32 | 53 | 38 | 90 | 5 | 14 | 26 | 54 | 85 |
| | | Hydrolysis resistance determination | - | ○ | ○ | ○ | ○ | ○ | ○ | × | × | ○ | ○ | ○ |

| | | | | | | | | | | | | | | |
|---|---|---|---|---|---|---|---|---|---|---|---|---|---|---|
| *:Too much discharge due to low viscosity | | | | | | | | | | | | | | |

As shown in Table 1, the polyamide resin composition of the present invention had high hydrolysis resistance over a long period of time while being excellent in both kneading stability and formability into a tube, and exhibited significantly high suitability as a material of a tube for transporting a liquid such as a coolant. It is considered that, when the value of [{S2/(S2 + S1)} × 100] is 64 to 90, low molecular weight components are contained in a relatively large and suitable amount, so that both flowability and hydrolysis resistance are achieved. On the other hand, in Comparative Examples 1 and 2 containing no polyolefin or containing polyolefin in a small amount and Comparative Examples 3 to 5 each having a low [{S2/(S2 + S1)} × 100] value, the viscosity was too low to measure the MFR, and tube formability was problematic.

## Claims

1. A polyamide resin composition comprising an aliphatic polyamide resin, and a polyolefin having a functional group exhibiting reactivity with a terminal group of the polyamide resin, wherein
the aliphatic polyamide resin has 80 mol% or more of a moiety derived from a linear or branched hydrocarbon compound based on the total monomer units;
a mass ratio of a content of the polyolefin (B) to a total mass of a content of the aliphatic polyamide resin (A) and the content of the polyolefin (B), [(B)/{(A)+(B)}], is 0.15 to 0.40; and
the aliphatic polyamide resin has the following characteristic in a molecular weight distribution curve in terms of polymethyl methacrylate:
a value of [{ S2/(S2 + S1)} × 100] is 64 to 90, wherein S1 represents an area of a portion bounded by the molecular weight distribution curve from a point having a highest molecular weight among points corresponding to a weight fraction of 70% when a weight fraction of the most frequent value of the molecular weight distribution curve is defined as 100% to a molecular weight maximum value and an abscissa corresponding to a weight fraction of 0%, and S2 represents an area of a portion bounded by the molecular weight distribution curve from a point having a lowest molecular weight among the points corresponding to the weight fraction of 70% to a molecular weight minimum value and the abscissa corresponding to the weight fraction of 0%.

2. The polyamide resin composition according to claim 1, wherein the polyamide resin composition has an MFR measured when an amount of 5000 g is heated to 300°C in accordance with ISO1133 of 0.01 g/10 min or more and 20 g/10 min or less.

3. The polyamide resin composition according to claim 1, wherein an amount of a functional group per 1 g of the polyolefin [C1] is more than 25 µmol/g and less than 100 µmol/g, and an amount of an amino group per 1 g of the aliphatic polyamide resin [A1] is more than 25 µmol/g and less than 100 µmol/g.

4. The polyamide resin composition according to claim 1, wherein a product of [C2] × [A2] is 250 to 750 ((µmol/g)²), wherein [C2] represents an amount of a functional group of the polyolefin contained per 1 g of the polyamide resin composition and [A2] represents an amount of an amino group of the aliphatic polyamide resin contained per 1 g of the polyamide resin composition.

5. The polyamide resin composition according to claim 1, wherein a ratio of the number of methylene groups ([CH2]) to the number of amide groups ([NHCO]), [CH2]/[NHCO], in the aliphatic polyamide resin exceeds 5 on average.

6. The polyamide resin composition according to claim 1, wherein the aliphatic polyamide resin is at least one selected from the group consisting of PA11, PA12, PA69, PA610, PA612, PA910, PA912, PA1010, PA1012, and PA1212.

7. The polyamide resin composition according to claim 1, wherein the polyolefin has at least one functional group selected from the group consisting of a carboxy group, an acid anhydride group, a carboxylic acid ester group, a carboxylic acid imide group, a carboxylic acid amide group, and an epoxy group, or a salt thereof.

8. The polyamide resin composition according to claim 1, wherein the polyolefin is at least one selected from the group consisting of a copolymer which has an (ethylene and/or propylene)/α-olefin copolymer as a main backbone and at least a part of which has a functional group exhibiting reactivity with the terminal group of the aliphatic polyamide resin, and an (ethylene and/or propylene)/(α,β-unsaturated carboxylic acid and/or α,β-unsaturated carboxylic acid ester) copolymer.

9. The polyamide resin composition according to claim 1, wherein a weight-average molecular weight (Mw) of the polyamide resin is 50,000 to 80,000.

10. The polyamide resin composition according to any one of claims 1 to 9, wherein the polyamide resin composition is used in a hollow formed product for carrying a coolant.

11. A tube, a hose, or a pipe, comprising the polyamide resin composition according to any one of claims 1 to 9.

12. A hollow formed product having a single layer structure of the polyamide resin composition according to any one of claims 1 to 9.
